# EUROPEAN PATENT SPECIFICATION

(11) **EP 3 295 721 B1**
(45) Date of publication and mention of the grant of the patent: **17.07.2019**
(21) Application number: 16744913.1
(22) Date of filing: 12.05.2016
(51) Int. Cl.: H04W 52/02, H04W 72/12

(54) **POWER SAVE TRIGGER**
ENERGIEEINSPARUNGSAUSLÖSER
DÉCLENCHEUR D'ÉCONOMIE D'ÉNERGIE

(30) Priority: 13.05.2015 US 201562161019 P; 15.05.2015 US 201562162061 P; 10.05.2016 US 201615151411
(43) Date of publication of application: 21.03.2018
(73) Proprietor: QUALCOMM Incorporated, San Diego, CA 92121-1714 (US)
(72) Inventor: JIA, Zhanfeng, San Diego, California 92121-1714 (US); CHO, James, San Diego, California 92121-1714 (US); KUMAR, Sumeet, San Diego, California 92121-1714 (US); HOMCHAUDHURI, Sandip, San Diego, California 92121-1714 (US); O'DONNELL, Ian, San Diego, California 92121-1714 (US); ZHANG, Ning, San Diego, California 92121-1714 (US); RAISSINIA, Alireza, San Diego, California 92121-1714 (US)
(74) Representative: Hohgardt, Martin
(86) International application number: PCT/US2016/032035
(87) International publication number: WO 2016/183293

(56) References cited:
- EP-A2- 2 840 863
- US-A1- 2014 204 821
- US-A1- 2014 341 098

## Description

### TECHNICAL FIELD

The example embodiments relate generally to wireless networks, and specifically to delivering downlink data to stations in power save mode.

### BACKGROUND OF RELATED ART

A wireless local area network (WLAN) may be formed by one or more access points (APs) that provide a shared wireless communication medium for use by a number of client devices or stations (STAs) as for example described in US 2014/0204821 A1, US 2014/0341098 A1. and EP 2 840 863 A2. Each AP, which may correspond to a Basic Service Set (BSS), periodically broadcasts beacon frames to enable any STAs within wireless range of the AP to establish and/or maintain a communication link with the WLAN. The beacon frames, which may include a traffic indication map (TIM) and/or a delivery traffic indication message (DTIM) indicating whether the AP has queued downlink (DL) data for one or more STAs, are typically broadcast according to a target beacon transmission time (TBTT) schedule. A TIM is typically broadcast with each beacon frame, whereas a DTIM may be broadcast at a frequency specified by a DTIM interval (e.g., once every four beacon frames).

When multiple STAs receive a TIM or a DTIM indicating that the AP has queued DL data for the STAs, each of the STAs may contend with each other for medium access to transmit a request to the AP to deliver the queued DL data. The STAs typically use an exponential backoff procedure when contending for medium access to reduce the probability of collisions on the shared wireless medium. As the number of STAs contending for medium access increases, the probability of collisions on the wireless medium also increases, which in turn may undesirably result in medium congestion, delayed delivery of queued DL data, and increased power consumption.

Accordingly, there is a need to reduce the traffic overhead and delayed service associated with delivering DL data to multiple STAs.

### SUMMARY

This Summary is provided to introduce in a simplified form a selection of concepts that are further described below in the Detailed Description. This Summary is not intended to identify key features or essential features of the claimed subject matter, nor is it intended to limit the scope of the claimed subject matter.

Apparatuses and methods are disclosed that may facilitate the delivery of queued downlink (DL) data to a plurality of wireless devices without medium access contention operations. In one aspect, a method for a second wireless device to deliver queued downlink (DL) data to a plurality of first wireless devices is disclosed. The method includes determining, for each of the plurality of first wireless devices, a presence of a corresponding set of queued DL data; transmitting a beacon frame identifying which of the plurality of first wireless devices has queued DL data; transmitting, to each of the identified first wireless devices, permission to request delivery of queued DL data; receiving, from each of the identified first wireless devices, a request for delivery of queued DL data; and concurrently transmitting, to each of the identified first wireless devices, the corresponding set of queued DL data. According to the invention, the beacon frame indicates to each of the identified first wireless devices to transmit a request for delivery of the queued DL data only upon receiving permission from the second wireless device.

In another aspect, a non-transitory computer-readable storage medium is disclosed. The non-transitory computer-readable storage medium is configured to store instructions that, when executed by one or more processors of a wireless device, cause the wireless device to perform the aforementioned method.

In another aspect, a wireless device is disclosed. The wireless device includes means for determining, for each of a plurality of mobile devices, a presence of a corresponding set of queued downlink (DL) data; means for transmitting a beacon frame identifying which of the plurality of mobile devices has queued DL data; means for transmitting, to each of the identified mobile devices, permission to request delivery of queued DL data; means for receiving, from each of the identified mobile devices, a request for delivery of the queued DL data; and means for concurrently transmitting, to each of the identified mobile devices, the corresponding set of queued DL data. According to the invention, the beacon frame indicates to each of the identified first wireless devices to transmit a request for delivery of the queued DL data only upon receiving permission from the second wireless device.

### BRIEF DESCRIPTION OF THE DRAWINGS

The example embodiments are illustrated by way of example and are not intended to be limited by the figures of the accompanying drawings, where:
FIG. 1 shows a block diagram of a wireless system within which the example embodiments may be implemented.
FIG. 2 shows a block diagram of a wireless station (STA) in accordance with example embodiments.
FIG. 3 shows a block diagram of an access point (AP) in accordance with example embodiments.
FIG. 4 depicts a data queuing and contention system 400 that may be implemented within the AP 300 of FIG. 3.
FIG. 5 shows an example time sequence diagram for scheduling downlink data transmissions using a power save trigger frame, in accordance with example embodiments.
FIG. 6 shows an example time sequence diagram for scheduling downlink data transmissions using an implicit trigger, in accordance with example embodiments.
FIG. 7 is an illustrative flow chart depicting example operations for scheduling the transmission of downlink data to a number of wireless devices using a power save trigger frame, in accordance with example embodiments.
FIG. 8 is an illustrative flow chart depicting example operations for receiving downlink data from a wireless device based on a power save trigger frame, in accordance with example embodiments.

Like reference numerals refer to corresponding parts throughout the drawing figures.

### DETAILED DESCRIPTION

The example embodiments are described below in the context of delivering queued DL data to wireless devices in wireless local area network (WLAN) systems for simplicity only. It is to be understood that the example embodiments are equally applicable to data retrieval and delivery in other wireless networks (e.g., cellular networks, pico networks, femto networks, satellite networks), as well as for systems using signals of one or more wired standards or protocols (e.g., Ethernet and/or HomePlug/PLC standards). As used herein, the terms "WLAN" and "Wi-Fi®" may include communications governed by the IEEE 802.11 family of standards, BLUETOOTH® (Bluetooth), HiperLAN (a set of wireless standards, comparable to the IEEE 802.11 standards, used primarily in Europe), and other technologies having relatively short radio propagation range. Thus, the terms "WLAN" and "Wi-Fi" may be used interchangeably herein. In addition, although described below in terms of an infrastructure WLAN system including one or more APs and a number of STAs, the example embodiments are equally applicable to other WLAN systems including, for example, multiple WLANs, peer-to-peer (or Independent Basic Service Set) systems, Wi-Fi Direct systems, and/or Hotspots. In addition, although described herein in terms of exchanging data frames between wireless devices, the example embodiments may be applied to the exchange of any data unit, packet, and/or frame between wireless devices. Thus, the term "frame" may include any frame, packet, or data unit such as, for example, protocol data units (PDUs), MAC protocol data units (MPDUs), and physical layer convergence procedure protocol data units (PPDUs). The term "A-MPDU" may refer to aggregated MPDUs.

In the following description, numerous specific details are set forth such as examples of specific components, circuits, and processes to provide a thorough understanding of the present disclosure. The term "coupled" as used herein means connected directly to or connected through one or more intervening components or circuits. The term "associated AP" refers to an AP with which a given STA is associated (e.g., there is an established communication channel or link between the AP and the given STA). The term "non-associated AP" refers to an AP with which a given STA is not associated (e.g., there is not an established communication channel or link between the AP and the given STA, and thus the AP and the given STA may not yet exchange data frames). The term "associated STA" refers to a STA that is associated with a given AP, and the term "non-associated STA" refers to a STA that is not associated with the given AP.

Also, in the following description and for purposes of explanation, specific nomenclature is set forth to provide a thorough understanding of the example embodiments. However, it will be apparent to one skilled in the art that these specific details may not be required to practice the example embodiments. In other instances, well-known circuits and devices are shown in block diagram form to avoid obscuring the present disclosure. The example embodiments are not to be construed as limited to specific examples described herein but rather to include within their scopes all embodiments defined by the appended claims.

To conserve power, each station in a WLAN may enter a low-power state (or "power save mode") when the station has no data to send and/or to receive from the AP. In order to maintain its connection with the AP, the station may periodically wake up from the power save mode to receive beacon frames from the AP. More specifically, the beacon frames may include a traffic indication map (TIM) and/or a delivery traffic indication message (DTIM) indicating whether the AP has queued downlink (DL) data for each of a number of stations. If the TIM or DTIM bit is asserted for a particular station, that station may remain in an awake state and contend for medium access to request delivery of the queued DL data from the AP.

As mentioned above, when an AP has queued DL data for a plurality of STAs, medium congestion, service delays, and/or increased power consumption may result from the plurality of STAs simultaneously contending for medium access to request delivery of the queued DL data. Therefore, it may be desirable to reduce the traffic overhead and delayed service associated with delivering DL data to a plurality of STAs. These are at least some of the technical problems to be solved by the example embodiments.

The IEEE 802.11ax standards may introduce multiple access mechanisms, such as an orthogonal frequency-division multiple access (OFDMA) mechanism, that allow multiple STAs to transmit and/or receive data on a shared wireless medium at the same time. The example embodiments may leverage one or more of these multiple access mechanisms to allow an AP to schedule and/or deliver queued DL data to a plurality of STAs without the plurality of STAs contending with each other for medium access to request delivery of the queued DL data. These and other details of the example embodiments, which may provide one or more solutions to the aforementioned technical problems, are described below.

Example embodiments include disclosing apparatuses and methods that allow an AP to use power save (PS) trigger frames to schedule concurrent DL data transmissions to a plurality of STAs. By using PS trigger frames to schedule delivery of queued DL data to a plurality of STAs, the plurality of STAs may not need to contend with each other for medium access to request delivery of queued DL data. Instead, a number of STAs that receive the PS trigger frame may concurrently transmit requests for delivery of the queued DL data without contending with each other for medium access, thereby reducing delays associated with medium access contention operations. Upon receiving the requests, the AP may concurrently transmit queued DL data to the requesting STAs, for example, using multiple access mechanisms. In some aspects, the AP may concurrently transmit queued DL data to multiple STAs using OFDMA communications or multi-user multiple-input multiple-output (MU-MIMO) communications. In other aspects, the AP may concurrently transmit queued DL data to multiple STAs using multiple-destination A-MPDUs (MD-AMPDUs).

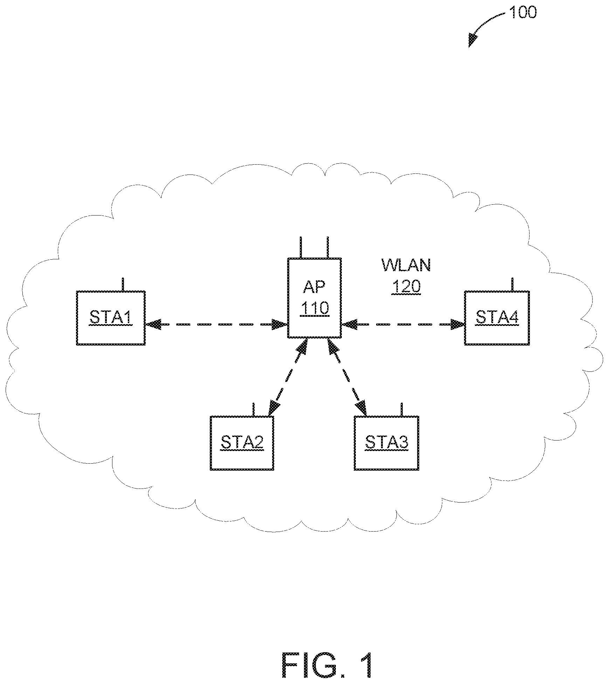

FIG. 1 is a block diagram of a wireless system 100 within which the example embodiments may be implemented. The wireless system 100 is shown to include four wireless stations STA1-STA4, a wireless access point (AP) 110, and a wireless local area network (WLAN) 120. The WLAN 120 may be formed by a plurality of Wi-Fi access points (APs) that may operate according to the IEEE 802.11 family of standards (or according to other suitable wireless protocols). Thus, although only one AP 110 is shown in FIG. 1 for simplicity, it is to be understood that WLAN 120 may be formed by any number of access points such as AP 110. The AP 110 is assigned a unique MAC address that is programmed therein by, for example, the manufacturer of the access point. Similarly, each of STA1-STA4 is also assigned a unique MAC address. For some embodiments, the wireless system 100 may correspond to a multiple-input multiple-output (MIMO) wireless network. Further, although the WLAN 120 is depicted in FIG. 1 as an infrastructure BSS, for other example embodiments, WLAN 120 may be an IBSS, an ad-hoc network, or a peer-to-peer (P2P) network (e.g., operating according to the Wi-Fi Direct protocols).

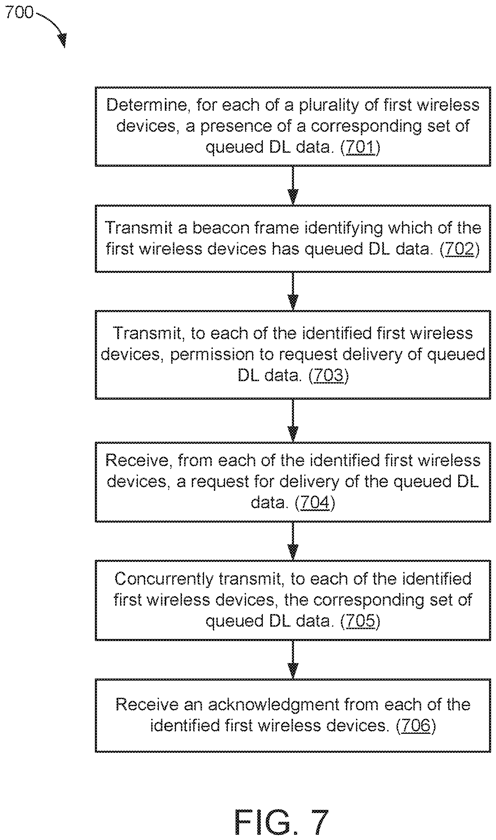

Each of stations STA1-STA4 may be any suitable Wi-Fi enabled wireless device including, for example, a cell phone, personal digital assistant (PDA), tablet device, laptop computer, or the like. Each station STA may also be referred to as a user equipment (UE), a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology. For at least some embodiments, each STA may include one or more transceivers, one or more processing resources (e.g., processors and/or ASICs), one or more memory resources, and a power source (e.g., a battery). The memory resources may include a non-transitory computer-readable medium (e.g., one or more nonvolatile memory elements, such as EPROM, EEPROM, Flash memory, a hard drive, etc.) that stores instructions for performing operations described below with respect to FIGS. 7-8.

The AP 110 may be any suitable device that allows one or more wireless devices to connect to a network (e.g., a local area network (LAN), wide area network (WAN), metropolitan area network (MAN), and/or the Internet) via AP 110 using Wi-Fi, Bluetooth, or any other suitable wireless communication standards. For at least one embodiment, AP 110 may include one or more transceivers, one or more processing resources (e.g., processors and/or ASICs), one or more memory resources, and a power source. The memory resources may include a non-transitory computer-readable medium (e.g., one or more nonvolatile memory elements, such as EPROM, EEPROM, Flash memory, a hard drive, etc.) that stores instructions for performing operations described below with respect to FIGS. 7-8.

For the stations STA1-STA4 and/or AP 110, the one or more transceivers may include Wi-Fi transceivers, Bluetooth transceivers, cellular transceivers, and/or other suitable radio frequency (RF) transceivers (not shown for simplicity) to transmit and receive wireless communication signals. Each transceiver may communicate with other wireless devices in distinct operating frequency bands and/or using distinct communication protocols. For example, the Wi-Fi transceiver may communicate within a 900 MHz frequency band, a 2.4 GHz frequency band, a 5 GHz frequency band, and/or within a 60 MHz frequency band in accordance with the IEEE 802.11 specification. The cellular transceiver may communicate within various RF frequency bands in accordance with a 4G Long Term Evolution (LTE) protocol described by the 3rd Generation Partnership Project (3GPP) (e.g., between approximately 800 MHz and approximately 3.9 GHz) and/or in accordance with other cellular protocols (e.g., a Global System for Mobile (GSM) communications protocol). In other embodiments, the transceivers included within the STA may be any technically feasible transceiver such as a wireless personal area network (WPAN) or ZigBee transceiver described by a specification from the IEEE 802.15.4 or ZigBee specifications, a WiGig transceiver, and/or a HomePlug transceiver described a specification from the HomePlug Alliance.

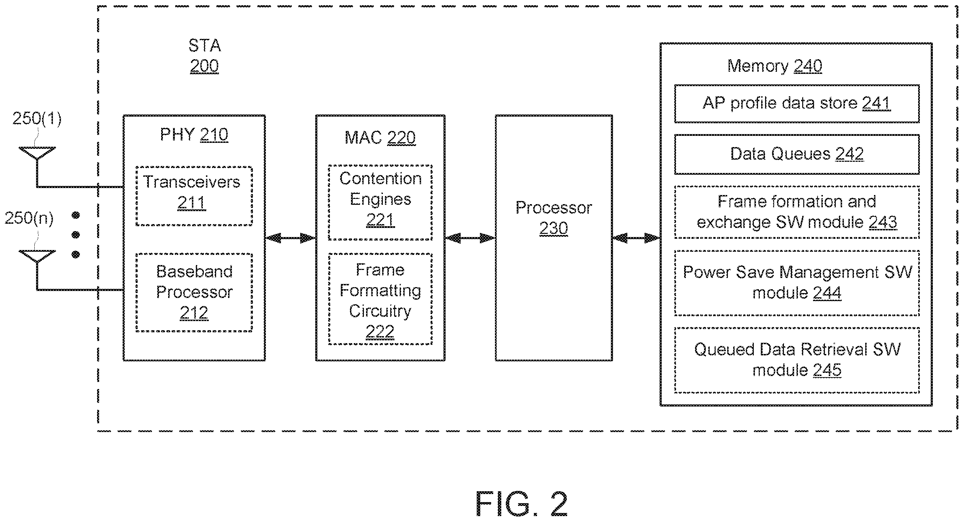

FIG. 2 shows an example STA 200 that may be one embodiment of any of the stations STA1-STA4 of FIG. 1. The STA 200 may include a physical layer (PHY) 210, a media access control layer (MAC) 220, a processor 230, a memory 240, and a number of antennas 250(1)-250(n). The PHY 210 may include at least a number of transceivers 211 and a baseband processor 212. The transceivers 211 may be coupled to antennas 250(1)-250(n), either directly or through an antenna selection circuit (not shown for simplicity). The transceivers 211 may be used to transmit signals to and receive signals from AP 110 and/or other STAs (see also FIG. 1), and may be used to scan the surrounding environment to detect and identify nearby access points and/or other STAs (e.g., within wireless range of STA 200). Although not shown in FIG. 2 for simplicity, the transceivers 211 may include any number of transmit chains to process and transmit signals to other wireless devices via antennas 250(1)-250(n), and may include any number of receive chains to process signals received from antennas 250(1)-250(n). Thus, for example embodiments, the STA 200 may be configured for MIMO operations. The MIMO operations may include single-user MIMO (SU-MIMO) operations and MU-MIMO operations. The STA 200 may also be configured for uplink (UL) transmissions using UL OFDMA communications and/or UL MU-MIMO communications, and may be configured to receive DL data using OFDMA communications, MU-MIMO communications, and/or MD-AMPDUs.

The baseband processor 212 may be used to process signals received from processor 230 and/or memory 240 and to forward the processed signals to transceivers 211 for transmission via one or more of antennas 250(1)-250(n), and may be used to process signals received from one or more of antennas 250(1)-250(n) via transceivers 211 and to forward the processed signals to processor 230 and/or memory 240.

The MAC 220 may include at least a number of contention engines 221 and frame formatting circuitry 222. The contention engines 221 may contend for access to one or more shared wireless mediums, and may also store packets for transmission over the one or more shared wireless mediums. The STA 200 may include one or more contention engines 221 for each of a plurality of different access categories. For other embodiments, the contention engines 221 may be separate from MAC 220. For still other embodiments, the contention engines 221 may be implemented as one or more software modules (e.g., stored in memory 240 or stored in memory provided within MAC 220).

The frame formatting circuitry 222 may be used to create and/or format frames received from processor 230 and/or memory 240 (e.g., by adding MAC headers to PDUs provided by processor 230) and/or re-format frames received from PHY 210 (e.g., by stripping MAC headers from frames received from PHY 210).

Memory 240 may include an AP profile data store 241 that stores profile information for a number of APs. Example profile information for a particular AP may include the AP's service set identification (SSID), MAC address, channel information, received signal strength indicator (RSSI) values, goodput values, channel state information (CSI), supported data rates, supported protocols, PS-Trigger frame and other capabilities, connection history with STA 200, a trustworthiness value of the AP (e.g., indicating a level of confidence about the AP's location, etc.), and any other suitable information pertaining to or describing the operation of the AP.

Memory 240 may include a number of data queues 242. The data queues 242 may store uplink (UL) data to be transmitted from STA 200 to one or more other wireless devices. In some aspects, the memory 240 may include one or more data queues 242 for each of a plurality of destination addresses (e.g., associated with different intended recipients of the UL data). In other aspects, the memory 240 may also include one or more data queues 242 for each of a plurality of different priority levels or access categories.

Memory 240 may also include a non-transitory computer-readable medium (e.g., one or more nonvolatile memory elements, such as EPROM, EEPROM, Flash memory, a hard drive) that may store at least the following software (SW) modules:
- a frame formation and exchange software module 243 to facilitate the creation and exchange of any suitable frames (e.g., data frames, action frames, control frames, and management frames) between STA 200 and other wireless devices, for example, as described below for one or more operations of FIGS. 7-8;
- a power save management software module 244 to facilitate STA 200's entry into a power save mode (e.g., upon determining that an AP has no queued DL data for STA 200) and/or to facilitate STA 200's exit from the power save mode (e.g., to enter an awake state and receive a beacon frame, a trigger frame, and/or DL data from the AP), for example, as described below for one or more operations of FIGS. 7-8; and
- a queued data retrieval software module 245 to determine whether an AP has queued DL data for STA 200, to generate responses to PS-Trigger frames received from the AP, and/or to retrieve queued DL data from the AP, for example, as described below for one or more operations of FIGS. 7-8.
Each software module includes instructions that, when executed by processor 230, cause STA 200 to perform the corresponding functions. The non-transitory computer-readable medium of memory 240 thus includes instructions for performing all or a portion of the STA-side operations depicted in FIGS. 7-8.

Processor 230 may be any suitable one or more processors capable of executing scripts or instructions of one or more software programs stored in STA 200 (e.g., within memory 240). For example, processor 230 may execute the frame formation and exchange software module 243 to facilitate the creation and exchange of any suitable frames (e.g., data frames, action frames, control frames, and management frames) between STA 200 and other wireless devices. Processor 230 may also execute the power save management software module 244 to facilitate STA 200's entry into a power save mode (e.g., upon determining that an AP has no queued DL data for STA 200) and/or to facilitate STA 200's exit from the power save mode (e.g., to enter an awake state and receive a beacon frame, a trigger frame, and/or DL data from the AP). Processor 230 may also execute the queued data retrieval software module 245 to determine whether an AP has queued DL data for STA 200, to generate responses to PS-Trigger frames received from the AP, and/or to retrieve queued DL data from the AP.

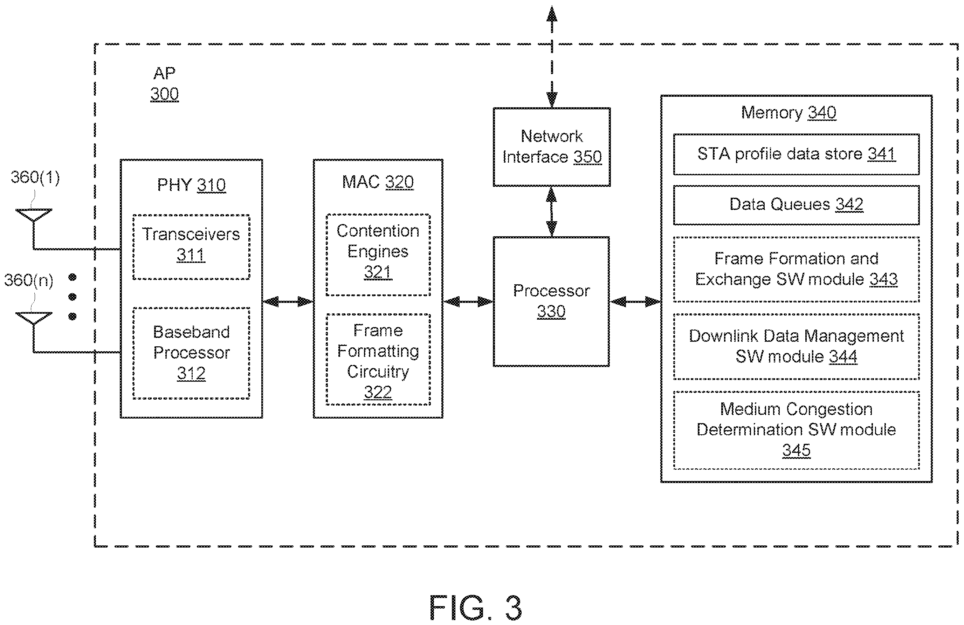

FIG. 3 shows an example AP 300 that may be one embodiment of the AP 110 of FIG. 1. AP 300 may include a PHY 310, a MAC 320, a processor 330, a memory 340, a network interface 350, and a number of antennas 360(1)-360(n). PHY 310 may include at least a number of transceivers 311 and a baseband processor 312. The transceivers 311 may be coupled to antennas 360(1)-360(n), either directly or through an antenna selection circuit (not shown for simplicity). The transceivers 311 may be used to communicate wirelessly with one or more STAs, with one or more other APs, and/or with other suitable devices. Although not shown in FIG. 3 for simplicity, the transceivers 311 may include any number of transmit chains to process and transmit signals to other wireless devices via antennas 360(1)-360(n), and may include any number of receive chains to process signals received from antennas 360(1)-360(n). Thus, for example embodiments, the AP 300 may be configured for MIMO operations including, for example, SU-MIMO operations and MU-MIMO operations. The AP 300 may also be configured to receive UL transmissions using UL OFDMA communications or UL MU-MIMO communications, and/or may be configured to transmit DL data using OFDMA communications or MU-MIMO communications. In some aspects, the AP 300 may transmit DL data to multiple STAs using MD-AMPDUs.

The baseband processor 312 may be used to process signals received from processor 330 and/or memory 340 and to forward the processed signals to transceivers 311 for transmission via one or more of antennas 360(1)-360(n), and may be used to process signals received from one or more of antennas 360(1)-360(n) via transceivers 311 and to forward the processed signals to processor 330 and/or memory 340.

The network interface 350 may be used to communicate with a WLAN server (not shown for simplicity) either directly or via one or more intervening networks. Processor 330 may be any suitable one or more processors capable of executing scripts or instructions of one or more software programs stored in AP 300 (e.g., within memory 340).

The MAC 320 may include at least a number of contention engines 321 and frame formatting circuitry 322. The contention engines 321 may contend for access to the shared wireless medium and may also store packets for transmission over the shared wireless medium. For some embodiments, AP 300 may include one or more contention engines 321 for each of a plurality of different access categories. For other embodiments, the contention engines 321 may be separate from MAC 320. For still other embodiments, the contention engines 321 may be implemented as one or more software modules (e.g., stored in memory 340 or within memory provided within MAC 320).

The frame formatting circuitry 322 may be used to create and/or format frames received from processor 330 and/or memory 340 (e.g., by adding MAC headers to PDUs provided by processor 330) and re-format frames received from PHY 310 (e.g., by stripping MAC headers from frames received from PHY 310).

Memory 340 may include a STA profile data store 341 that stores profile information for a number of STAs. The profile information for a particular STA may include information including, for example, its MAC address, supported data rates, supported protocols, PS-Trigger frame and other capabilities, connection history with AP 300, and any other suitable information pertaining to or describing the operation of the STA.

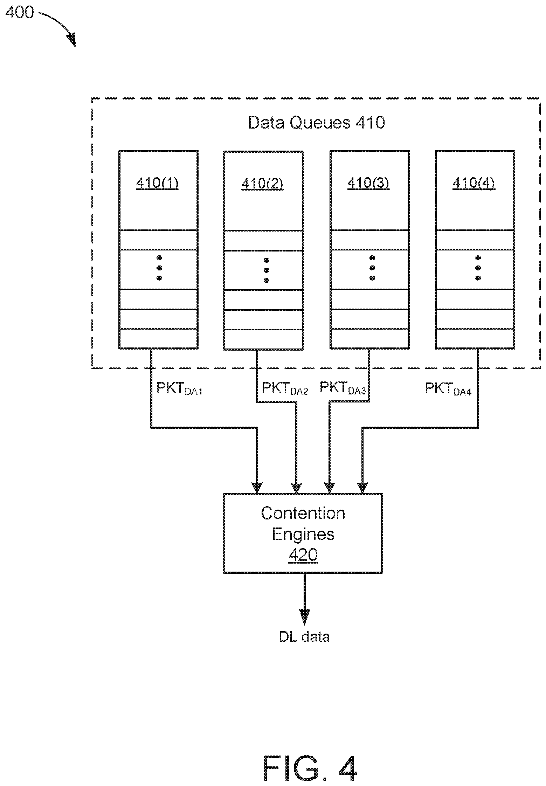

Memory 340 may also include a number of data queues 342. The data queues 342 may store downlink (DL) data to be transmitted from AP 300 to one or more other wireless devices. In some aspects, the memory 340 may include one or more data queues 342 for each of a plurality of destination addresses (e.g., corresponding to a plurality of different STAs that are to receive DL data from AP 300). More specifically, as described in more detail below with respect to FIG. 4, the AP 300 may store sets of queued DL data destined for different wireless devices in separate data queues 342, for example, so that a given one of the data queues 342 may store a set of queued DL data for subsequent delivery to a corresponding one of the other wireless devices. In this manner, the AP 300 may concurrently transmit, to each of a plurality of other wireless devices, a corresponding set of queued DL data stored in a respective one of the data queues 342.

Memory 340 may also include a non-transitory computer-readable medium (e.g., one or more nonvolatile memory elements, such as EPROM, EEPROM, Flash memory, a hard drive, and so on) that may store at least the following software (SW) modules:
- a frame formation and exchange software module 343 to facilitate the creation and exchange of any suitable frames (e.g., data frames, action frames, control frames, and management frames) between AP 300 and other wireless devices, for example, as described below for one or more operations of FIGS. 7-8;
- a downlink data management software module 344 to facilitate the queueing of DL data for STAs, to notify STAs of the presence of queued DL data, to trigger STAs to request delivery of queued DL data, and/or to transmit DL data to requesting STAs, for example, as described below for one or more operations of FIGS. 7-8; and
- a medium congestion determination software module 345 to facilitate the determination of a level of congestion on a shared wireless medium, to compare the determined level of congestion with a threshold value, and/or to selectively enable the use of PS-Trigger frames (e.g., to schedule the delivery of queued DL data to a number of STAs) based on the comparison, for example, as described below for one or more operations of FIGS. 7-8.
Each software module includes instructions that, when executed by processor 330, cause AP 300 to perform the corresponding functions. The non-transitory computer-readable medium of memory 340 thus includes instructions for performing all or a portion of the AP-side operations depicted in FIGS. 7-8.

For example, processor 330 may execute the frame formation and exchange software module 343 to facilitate the creation and exchange of any suitable frames (e.g., data frames, action frames, control frames, and management frames) between AP 300 and other wireless devices. Processor 330 may also execute the downlink data management software module 344 to facilitate the queueing of DL data for STAs, to notify STAs of the presence of queued DL data, to trigger STAs to request delivery of queued DL data, and/or to transmit DL data to requesting STAs. Processor 330 may also execute the medium congestion determination software module 345 to facilitate the determination of a level of congestion on a shared wireless medium, to compare the determined level of congestion with a threshold value, and/or to selectively enable the use of PS-Trigger frames (e.g., to schedule the delivery of queued DL data to a number of STAs) based on the comparison.

FIG. 4 depicts a data queuing and contention system 400 that may be implemented within the AP 300 of FIG. 3. For some embodiments, the data queuing and contention system 400 may be implemented by or correspond to MAC 320, processor 330, and/or memory 340 of FIG. 3. For other embodiments, the data queuing and contention system 400 may be a separate device or chip coupled to PHY 310, MAC 320, processor 330, and/or memory 340 of FIG. 3. The data queuing and contention system 400 is shown to include four data queues 410(1)-410(4) and one or more contention engines 420. Although only four data queues 410(1)-410(4) are shown in FIG. 4 for simplicity, it is to be understood that the data queuing and contention system 400 may include any suitable number of data queues.

The data queues 410(1)-410(4), which may be one embodiment of the data queues 342 of FIG. 3, may receive incoming data packets from an upper layer (not shown for simplicity) of the AP 300, for example, after packet classification operations that may determine at least the destination address (DA) of downlink data to be queued in the data queues 410(1)-410(4). For other embodiments, the packet classification operations may also determine the traffic identifier (TID) of downlink data to be queued in the data queues 410(1)-410(4).

More specifically, for the example of FIG. 4, each of the data queues 410(1)-410(4) may store a set of queued DL data that is to be transmitted to a corresponding one of destination addresses DA1-DA4. Each of the destination addresses DA1-DA4 may identify a corresponding STA to which the AP 300 may transmit data. For purposes of discussion herein, STA1 has a destination address of DA1, STA2 has a destination address of DA2, STA3 has a destination address of DA3, and STA4 has a destination address of DA4. Thus, for the example of FIG. 4, data queue 410(1) may store a first set of queued DL data for delivery to STA1, data queue 410(2) may store a second set of queued DL data for delivery to STA2, data queue 410(3) may store a third set of queued DL data for delivery to STA3, and data queue 410(4) may store a fourth set of queued DL data for delivery to STA4. In this manner, the data queuing and contention system 400 may queue downlink data on a per-user basis.

The contention engines 420, which may be one embodiment of contention engines 321 of FIG. 3, may include inputs to receive packets or corresponding sets of queued DL data from the data queues 410(1)-410(4) and may include one or more outputs to provide packets or DL data for delivery to one or more stations STA1-STA4. The contention engines 420 may contend for medium access on behalf of the data queues 410(1)-410(4). Upon gaining medium access, the contention engines 420 may forward one or more sets of queued DL data to PHY 310 of AP 300. In response thereto, the PHY 310 may concurrently transmit the one or more sets of queued DL data to their intended recipients (e.g., based on the destination addresses of stations STA1-STA4).

It is noted that the STA 200 of FIG. 2 may include a data queuing and contention system 400 similar to the data queuing and contention system 400 of FIG. 4.

As mentioned above, the example embodiments may allow an AP to use PS-Trigger frames to schedule concurrent DL data transmissions to a plurality of STAs without the STAs contending for medium access to request delivery of the queued DL data. In some aspects, a STA may indicate its capabilities to decode PS-Trigger frames and/or to request delivery of queued DL data based on decoded PS-Trigger frames during association with an AP. The STA may indicate its PS-Trigger frame capabilities in any suitable manner including, for example, asserting a PS-Trigger frame capabilities bit in an association request, a probe request, or other suitable control and/or management frame transmitted to the AP.

For some implementations, an AP may use an enhanced TIM element in a beacon frame to indicate that the receiving STAs are not to contend for medium access to request delivery of queued DL data, but rather are to wait for permission (granted by the AP) to transmit a request for delivery of the queued DL data. In this manner, medium access contention operations associated with requesting delivery of queued DL data from the AP may be avoided.

Because not all STAs may indicate support for PS-Trigger frames, the AP may allow some STAs (e.g., that do not support PS-Trigger frame capabilities) to contend for medium access to request delivery of queued DL data. For example, if a first group of STAs has not indicated support for PS-Trigger frame capabilities, then the AP may allow the first group of STAs to contend for medium access to request delivery of queued DL data. Further, if a second group of STAs has indicated support for PS-Trigger frame capabilities, then the AP may use PS-Trigger frames to schedule delivery of queued DL data to the second group of STAs, for example, while allowing the first group of STAs to contend for medium access to request delivery of queued DL data.

For at least some implementations, the AP may selectively use PS-Trigger frames to schedule delivery of queued DL data based on a level of congestion on the shared wireless medium. For example, if there is relatively little traffic or congestion on the wireless medium, then the time associated with transmission of PS-Trigger frames may be greater than the time associated with medium access contention operations to request delivery of queued DL data. Conversely, if there is relatively heavy traffic or congestion on the wireless medium, then the time associated with transmission of PS-Trigger frames may be less than the time associated with medium access contention operations to request delivery of queued DL data.

More specifically, in accordance with example embodiments, the AP may determine a level of congestion on the wireless medium, compare the level of congestion with a threshold value, and then selectively use PS-Trigger frames to schedule delivery of queued DL data based on the comparison. For example, if the level of congestion on the wireless medium exceeds the threshold value, then the AP may use PS-Trigger frames to schedule delivery of queued DL data. Conversely, if the level of congestion on the wireless medium does not exceed the threshold value, then the AP may not use PS-Trigger frames to schedule delivery of queued DL data, but rather allow the STAs to contend for medium access to request delivery of queued DL data.

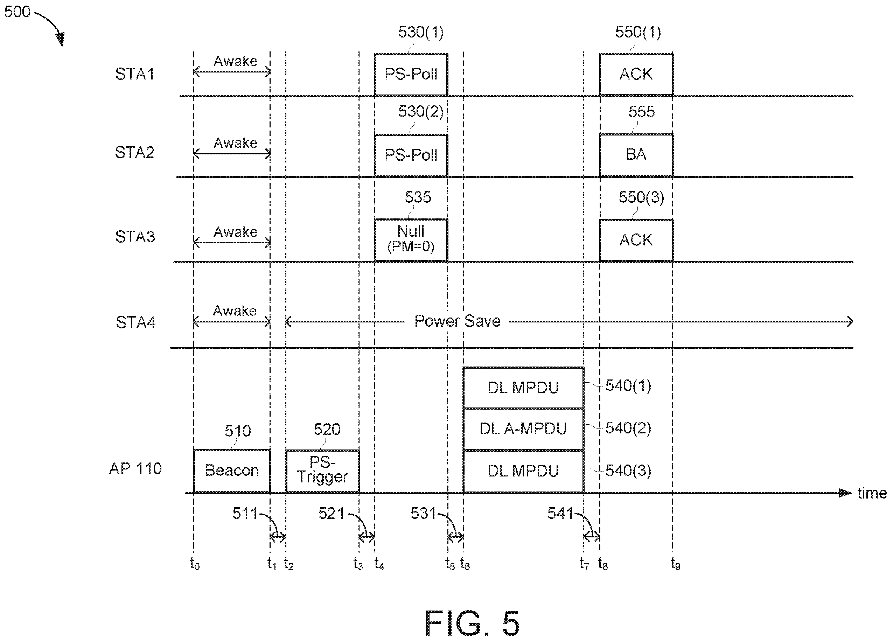

FIG. 5 shows a time sequence diagram 500 of an example operation for scheduling downlink data transmissions using a power save trigger frame, in accordance with example embodiments. The AP 110 may be AP 110 of FIG. 1 or AP 300 of FIG. 3. Each of stations STA1-STA4 may be one of stations STA1-STA4 of FIG. 1 or STA 200 of FIG. 2. Note that while only four stations STA1-STA4 are depicted in the example time sequence diagram 500, other numbers of STAs may be present (e.g., within wireless range of AP 110).

As depicted in FIG. 5, at time t₀, which may correspond to a target beacon transmission time (TBTT) schedule, the AP 110 may broadcast a beacon frame 510 to a set of receiving stations STA1-STA4. Beacon frame 510 may contain an indication of whether AP 110 has queued DL data for one or more of the receiving stations STA1-STA4. In some aspects, this indication may be provided within a traffic indication map (TIM) or a delivery traffic indication message (DTIM) included with beacon frame 510. Transmission of the beacon frame 510 may end at time t₁.

Each of the stations STA1-STA4 that is in power save mode may exit power save mode to receive the beacon frame 510 (e.g., by waking up in accordance with the TBTT schedule). Upon receiving the beacon frame 510 between times t₀ and t₁, each of the stations STA1-STA4 may decode the TIM or DTIM element provided therein to determine whether AP 110 has queued DL data for the STA. In some aspects, the beacon frame 510 may include an enhanced TIM element indicating that the receiving STAs are not to contend for medium access to request delivery of queued DL data. Instead, receiving STAs are to wait for permission (granted by the AP) to transmit a request for delivery of the queued DL data. If the AP 110 does not have queued DL data for a STA, then the STA may re-enter power save mode (e.g., and thus not be awake to receive a PS-Trigger frame). Conversely, if the AP 110 has queued DL data for a STA, then the STA may remain awake to receive a PS-Trigger frame. For the example of FIG. 5, station STA4 does not have any DL data queued in the AP 110, and may therefore return to the power save mode after receiving beacon frame 510. Conversely, each of stations STA1-STA3 has DL data queued in the AP 110, and may therefore remain in the awake state to subsequently receive a PS trigger frame.

Between times t₂ and t₃, the AP 110 may transmit a PS-Trigger frame 520. The PS-Trigger frame 520 may indicate or identify which of the receiving stations STA1-STA4 are to request queued DL data from AP 110. In some implementations, if the PS-Trigger frame 520 instructs a STA to request queued DL data from AP 110, then the STA may either transmit a PS-Poll frame to the AP 110 or transmit a Null Data frame having a de-asserted power management bit (e.g., PM = 0) to the AP 110. As discussed above, a de-asserted power management bit may indicate that the corresponding STA is to remain in the awake state, and may therefore receive queued DL data from AP 110.

Conversely, if the PS-Trigger frame 520 does not instruct a STA to request queued DL data from AP 110, then the STA may defer from contending for medium access for a wait period (e.g., by setting a duration of its network allocation vector (NAV) to the wait period). In some aspects, the wait period may be predetermined (e.g., agreed upon during association). In other aspects, the wait period may be dynamically adjusted.

Between times t₄ and t₅, each STA that was instructed (e.g., by the PS-Trigger frame 520) to request delivery of queued DL data may transmit a request, to the AP 110, to deliver the queued DL data. The request may be a PS-Poll frame or a Null Data frame having its PM bit set to 0 (e.g., to indicate that the STA will remain awake). For the example of FIG. 5, STA1 transmits a PS-Poll frame 530(1) to the AP 110 to request delivery of queued DL data to STA1. STA2 transmits a PS-Poll frame 530(2) to the AP 110 to request delivery of queued DL data to STA2. STA3 transmits a Null Data frame 535 (with PM = 0) to the AP 110 to request delivery of queued DL data to STA3. In some aspects, the PS-Poll frames 530(1)-530(2) and Null Data frame 535 may be concurrently transmitted to AP 110 by respective stations STA1-STA3 using either UL OFDMA communications or UL MU-MIMO communications.

Between times t₆ and t₇, the AP 110 may transmit queued DL data to stations STA1-STA3. In some aspects, the AP 110 may concurrently transmit the queued DL data to stations STA1-STA3 using either OFDMA communications or MU-MIMO communications. In other aspects, the AP 110 may concurrently transmit the queued DL data to stations STA1-STA3 as MD-AMPDUs. For the example depicted in FIG. 5, the AP 110 may concurrently transmit DL MPDU 540(1) to STA1, transmit DL A-MPDU 540(2) to STA2, and transmit DL MPDU 540(3) to STA3.

After receiving the DL data from the AP 110, each of the stations STA1-STA3 may transmit an acknowledgement between times t₈ and t₉ to confirm reception of the DL data. In some aspects, a STA may send an acknowledgement (ACK) frame to AP 110 to confirm reception of a single data packet (e.g., an MPDU), and may send a block acknowledgement (BA) frame to AP 110 to confirm reception of a number of aggregated data packets (e.g., an A-MPDU). Thus, for the example depicted in FIG. 5, STA1 sends an ACK frame 550(1) to confirm reception of DL MPDU 540(1). STA2 sends a BA frame 555 to confirm reception of DL A-MPDU 540(2). STA3 sends an ACK frame 550(3) to confirm reception of DL MPDU 540(3).

As depicted in FIG. 5, there may be a time period 511 between times t₁-t₂, a time period 521 between times t₃-t₄, a time period 531 between times t₅-t₆, and a time period 541 between times t₇-t₈. In some aspects, one or more of the time periods 511, 521, 531, and 541 may be a short inter-frame space (SIFS) duration or an arbitration inter-frame space (AIFS) duration. In other aspects, one or more of the time periods 511, 521, 531, and 541 may be a random backoff (RBO) period. In still other aspects, one or more of the time periods 511, 521, 531, and 541 may be any suitable time period.

The time period 511 between times t₁ and t₂ may allow STAs in power save mode sufficient time to wake up and receive the PS-Trigger frame 520. In some implementations, a duration of the time period 511 may be negotiated during association procedures between the AP 110 and stations STA1-STA4. As an addition or as an alternative, the duration of the time period 511 may be indicated in one or more beacon frames (e.g., beacon frame 510) transmitted from the AP 110. In some aspects, the duration of the time period 511 may be provided within an information element (IE) or a vendor-specific information element (VSIE) included within or appended to the beacon frames. In other aspects, the duration of the time period 511 may be indicated using a number of reserved bits in the beacon frames.

As described above with respect to FIG. 5, to determine whether the AP 110 has queued DL data for a STA, the STA may wake up from power save mode to receive a beacon frame (e.g. beacon frame 510). The STA may then decode the TIM or DTIM included in the beacon frame. For some embodiments, the AP 110 may allow one or more associated STAs (e.g., stations STA1-STA4 in the example of FIG. 5) to remain in power save mode during some beacon frame transmissions (e.g., so the STAs may conserve power). In some aspects, STAs associated with the AP 110 may wake up from power save mode for every beacon frame (e.g., at every TBTT). In other aspects, one or more STAs associated with the AP 110 may wake up from power save mode only for beacon frames containing a DTIM (e.g., at every DTIM period).

For some implementations, when the AP 110 has queued DL data for a plurality of STAs, the AP 110 may divide the plurality of STAs into a number of groups and then transmit queued DL data to the STAs in the same group at the same time. The AP 110 may assign each associated STA to a corresponding group of STAs and then transmit a separate PS-Trigger frame to each group of STAs at a different time. In response thereto, the STAs within each group may request delivery of queued DL data from the AP 110 at the same time. The AP 110 may schedule delivery of queued DL data to different groups of STAs at different (e.g., staggered) times. In some aspects, the AP 110 may assign each STA to a particular group of STAs during an association procedure between the AP 110 and the STA. For example, the AP 110 may assign a STA to a particular group based on the STA's device type (e.g., smartphone, laptop, tablet, etc.). In other aspects, a wireless standard by which the AP 110 and a STA operate may specify to which group the STA is to be assigned by the AP 110.

The AP 110 may assign a unique offset time to each group of STAs, and then schedule transmission of the PS-Trigger frames to the respective groups of STAs based on their corresponding unique offset times. In some aspects, the offset time may indicate a specific time, relative to the beacon frame transmission (e.g., the TBTTs), at which the STAs assigned to the corresponding group of STAs may expect to receive a PS-Trigger frame.

For other embodiments, the PS-Trigger frame 520 may not identify all associated STAs that are to request queued DL data from the AP 110. For one example, the PS-Trigger frame 520 may identify one or more selected groups of STAs that are to request delivery of queued DL data using PS-Poll frames or Null Data frames (e.g., in the manner described above with respect to FIG. 5). The non-selected group(s) of STAs may contend with each other for medium access to request delivery of queued DL data. For another example, the PS-Trigger frame 520 may identify a selected subset of STAs that are to request delivery of queued DL data using PS-Poll frames or Null Data frames (e.g., in the manner described above with respect to FIG. 5). The STAs not identified by the PS-Trigger frame 520 may contend with each other for medium access to request delivery of queued DL data.

For other embodiments, the AP 110 may not transmit the PS-Trigger frame to the receiving STAs, and the receiving STAs may not transmit PS-Poll frames or Null Data frames to the AP 110 (e.g., in contrast to the example depicted in FIG. 5). Instead, the AP 110 and the receiving STAs may exchange PS-Trigger capabilities and/or negotiate a number of PS-Trigger parameters prior to the delivery of queued DL data from the AP 110 to the receiving STAs. The PS-Trigger parameters negotiated between the AP 110 and a number of receiving STAs may define an "Implicit PS-Trigger" that allows the AP 110 to deliver queued DL data to a number of STAs without the STAs transmitting a delivery request (e.g., a PS-Poll frame or Null Data frame) to the AP 110. In some aspects, implicit PS-Trigger capabilities may be exchanged between the AP 110 and a given STA during an association procedure between the AP 110 and the given STA. In other aspects, implicit PS-Trigger capabilities may be exchanged after the STA is associated with the AP 110 (e.g., during an exchange of capability frames between the AP 110 and the STA).

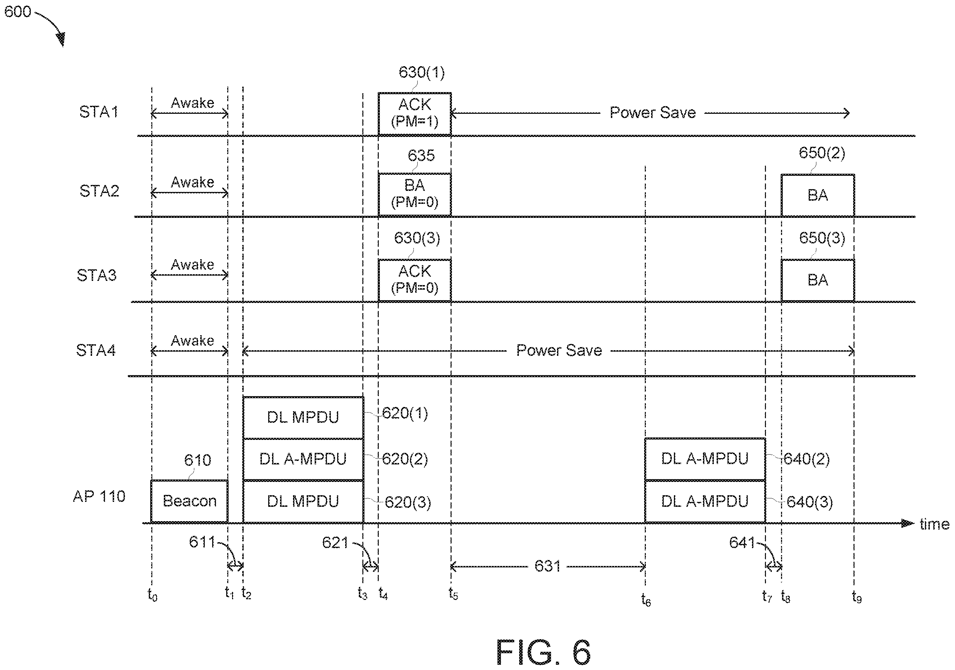

FIG. 6 is a time sequence diagram 600 of an example operation for scheduling downlink data transmissions using an Implicit PS-Trigger, in accordance with example embodiments. The AP 110 may be AP 110 of FIG. 1 or AP 300 of FIG. 3. Each of stations STA1-STA4 may be one of stations STA1-STA4 of FIG. 1 or STA 200 of FIG. 2. Note that while only four stations STA1-STA4 are depicted in the example time sequence diagram 600 of FIG. 6, other numbers of STAs may be present (e.g., within wireless range of AP 110).

As depicted in FIG. 6, at time t₀, which may correspond to a TBTT schedule, the AP 110 may transmit a beacon frame 610 to the receiving stations STA1-STA4. The beacon frame 610 may contain an indication of whether the AP 110 has queued DL data for one or more of the receiving stations STA1-STA4 (e.g., in a TIM or DTIM included with beacon frame 610). Transmission of the beacon frame 610 may end at time t₁.

Each of the stations STA1-STA4 that is in power save mode may exit power save mode to receive the beacon frame 610 (e.g., by waking up in accordance with the TBTT schedule). Upon receiving the beacon frame 610, each of the stations STA1-STA4 may decode the beacon frame 610 to determine whether the AP 110 has queued DL data for the STA. If the AP 110 does not have queued DL data for a STA, then the STA may re-enter power save mode. Conversely, if the AP 110 has queued DL data for a STA, then the STA may remain awake to receive the queued DL data from the AP 110. For the example of FIG. 6, station STA4 does not have any DL data queued in the AP 110, and may therefore return to the power save mode after receiving beacon frame 610. Conversely, each of stations STA1-STA3 has DL data queued in the AP 110, and may therefore remain in the awake state to subsequently receive the queued DL data from the AP 110.

In contrast to the example operation of FIG. 5, the AP 110 depicted in the example operation of FIG. 6 does not transmit a PS-Trigger frame, for example, because the AP 110 and the receiving stations STA1-STA4 may have already exchanged Implicit PS-Trigger capabilities. More specifically, for the example of FIG. 6, if a STA determines that the AP 110 has queued DL data for the STA (e.g., as may be indicated in a TIM or DTIM included with the beacon frame 610), then the STA does not transmit a PS-Poll frame or a Null Data frame to request delivery of the queued DL data from the AP 110. Instead, the STA may wait for transmission of the queued DL data from the AP 110.

Between times t₂ and t₃, the AP 110 may concurrently transmit queued DL data to each of the receiving stations STA1-STA3. In some aspects, the AP 110 may concurrently transmit the queued DL data to stations STA1-STA3 using either OFDMA communications or MU-MIMO communications. In other aspects, the AP 110 may concurrently transmit the queued DL data to stations STA1-STA3 as MD-AMPDUs. For the example of FIG. 6, the AP 110 transmits a DL MPDU 620(1) to STA1, transmits a DL A-MPDU 620(2) to STA2, and transmits a DL MPDU 620(3) to STA3, concurrently.

After receiving the DL data from the AP 110, each of the stations STA1-STA3 may transmit an acknowledgement between times t₄ and t₅ to confirm reception of the DL data. In some aspects, a STA may send an ACK frame to the AP 110 to confirm reception of a single data packet (e.g., an MPDU), and may send a BA frame to the AP 110 to confirm reception of a number of aggregated data packets (e.g., an A-MPDU). Thus, for the example depicted in FIG. 6, STA1 sends an ACK frame 630(1) to confirm reception of DL MPDU 620(1), STA2 sends a BA frame 635 to confirm reception of DL A-MPDU 620(2), and STA3 sends an ACK frame 630(3) to confirm reception of DL MPDU 620(3).

In some aspects, each of the stations STA1-STA3 may indicate its power management state in ACK frames and/or BA frames transmitted to the AP 110. For the example of FIG. 6, STA1 indicates that it will enter the power save mode after receiving DL MPDU 620(1) by setting the power management bit in ACK frame 630(1) to "1" (e.g., PM = 1). STA2 indicates that it will remain in the awake state after receiving DL A-MPDU 620(2) by setting the power management bit in BA frame 635 to "0" (e.g., PM = 0). STA3 indicates that it will remain in the awake state after receiving DL MPDU 620(3) by setting the power management bit in ACK frame 630(3) to "0" (e.g., PM = 0). Thus, at or after time ts, the AP 110 has information obtained from ACK frame 630(1), BA frame 635, and ACK frame 630(3) indicating that STA1 will enter the power save mode at or just after time t₅, that STA2 will remain in the awake state after time t₅, and that STA3 will remain in the awake state after time t₅, respectively.

In accordance with example embodiments, by informing the AP 110 that they will remain in the awake state after time t₅, STA2 and STA3 may each expect to receive additional queued DL data from the AP 110 at or around time t₆. The time period 631 between times t₅ and t₆, which may indicate how long after completion of the acknowledgement transmissions (e.g., BA frame 635 and ACK frame 630(3)) respective stations STA2 and STA3 may expect to receive the additional queued DL data from the AP 110, may be any suitable time period. In some aspects, the time period 631 may be negotiated between the AP 110 and stations STA1-STA4, for example, during association procedures or during an exchange of Implicit PS-Trigger capabilities. In other aspects, the time period 631 may be indicated to stations STA1-STA4 in beacon frames (e.g., beacon frame 610) and/or any other suitable management frame or control frame.

Between times t₆ and t₇, the AP 110 may transmit the additional queued DL data to stations STA2 and STA3. For the example of FIG. 6, the AP 110 transmits a DL A-MPDU 640(2) to STA2 and transmits a DL A-MPDU 640(3) to STA3, concurrently. In some aspects, the AP 110 may concurrently transmit the additional queued DL data to stations STA2-STA3 using either OFDMA communications or MU-MIMO communications. In other aspects, the AP 110 may concurrently transmit the additional queued DL data to stations STA2-STA3 as MD-AMPDUs. It is noted that the AP 110 does not transmit additional queued DL data to STA1 because STA1 indicated, in ACK frame 630(1), that it would re-enter the power save mode at or just after time t₅.

At time t₈, each of stations STA2-STA3 may transmit an acknowledgement to confirm reception of the additional queued DL data. More specifically, for the example of FIG. 6, STA2 transmits a BA frame 650(2) to the AP 110 between times t₈ and t₉ (e.g., to confirm reception of DL A-MPDU 640(2)), and STA3 transmits a BA frame 650(3) to the AP 110 between times t₈ and t₉ (e.g., to confirm reception of DL A-MPDU 640(2)).

As depicted in FIG. 6, there may be a time period 611 between times t₁-t₂, a time period 621 between times t₃-t₄, and a time period 641 between times t₇-t₈. In some aspects, one or more of the time periods 611, 621, and 641 may be a SIFS duration or an AIFS duration. In other aspects, one or more of the time periods 611, 621, and 641 may be an RBO period. In still other aspects, one or more of the time periods 611, 621, and 641 may be any suitable time period.

FIG. 7 is a flow chart depicting an example operation 700 for a second wireless device to schedule and deliver queued downlink (DL) data to a number of first wireless devices, in accordance with example embodiments. For the example operation 700, each of the first wireless devices may be a mobile station (e.g., one of stations STA1-STA4 of FIG. 1 or STA 200 of FIG. 2), and the second wireless device may be an access point (e.g., AP 110 of FIG. 1 or AP 300 of FIG. 3).

The second wireless device may determine, for each of a plurality of first wireless devices, a presence of a corresponding set of queued DL data (701). In some aspects, the second wireless device may determine the presence of queued DL data by executing downlink data management SW module 344 of FIG. 3. The second wireless device may transmit a beacon frame identifying which of the first wireless devices has queued DL data (702). The beacon frame may be transmitted according to a TBTT schedule, and may include a TIM or a DTIM indicating which of the first wireless devices has DL data queued in the second wireless device. In some aspects, the beacon frame may include an enhanced TIM element indicating that the receiving STAs are not to contend for medium access to request delivery of queued DL data, but rather are to wait for permission (granted by the AP) to transmit a request for delivery of the queued DL data.

As described above, each of the first wireless devices may decode the TIM or DTIM and determine whether there is any DL data for the first wireless device queued in the second wireless device. For example, referring also to FIG. 5, station STA4 may determine that the AP 110 does not have any queued DL data for STA4, and may therefore return to the power save mode after receiving the beacon frame. Conversely, each of stations STA1-STA3 may determine that the AP 110 has queued DL data, and may thus remain in the awake state (e.g., to receive a PS trigger frame and/or a subsequent transmission of queued DL data from the AP 110).

Then, the second wireless device may transmit, to each of the identified first wireless devices, permission to request delivery of queued DL data (703). For some implementations, the permission may be a PS-Trigger frame, for example, as described above with respect to FIG. 5. In some aspects, the second wireless device may generate and transmit the PS-Trigger frame by executing one or more of frame formation and exchange SW module 343 and downlink data management SW module 344. For example, referring also to FIG. 5, each of stations STA1-STA3 is awake to receive the PS-Trigger frame, and may decode information in the PS-Trigger frame to determine when to transmit a request, to the AP 110, for delivery of the queued DL data. Conversely, station STA4 has returned to the power save mode, and thus may not receive the PS-Trigger frame.

Next, the second wireless device receive, from each of the identified first wireless devices, a request for delivery of the queued DL data (704). The request for delivery of the queued DL data may be a PS-Poll frame or a Null Data frame having a PM bit set to 0 (e.g., to indicate that a corresponding one of the first wireless devices will remain in the awake state). For some implementations, the requests for delivery of the queued DL data may be received concurrently using UL OFDMA communications or UL MU-MIMO communications. In some aspects, the requests for queued DL data may be received by executing one or more of frame formation and exchange SW module 343 and downlink data management SW module 344.

After receiving the requests, the second wireless device may concurrently transmit, to each of the identified first wireless devices, the corresponding set of queued DL data (705). For some implementations, the queued DL data may be transmitted using OFDMA communications or MU-MIMO communications. For other implementations, the queued DL data may be transmitted as one or more MD-AMPDUs. In some aspects, the requested queued DL data may be transmitted by executing one or more of frame formation and exchange SW module 343 and downlink data management SW module 344.

The second wireless device may receive an acknowledgment from each of the identified first wireless devices (706). Each of the acknowledgments may be an ACK frame or a BA frame, and may indicate a power save mode status for a corresponding one of the first wireless devices. For some implementations, the acknowledgments may be received concurrently using UL OFDMA communications or UL MU-MIMO communications. In some aspects, the acknowledgments may be received by executing one or more of frame formation and exchange SW module 343 and downlink data management SW module 344.

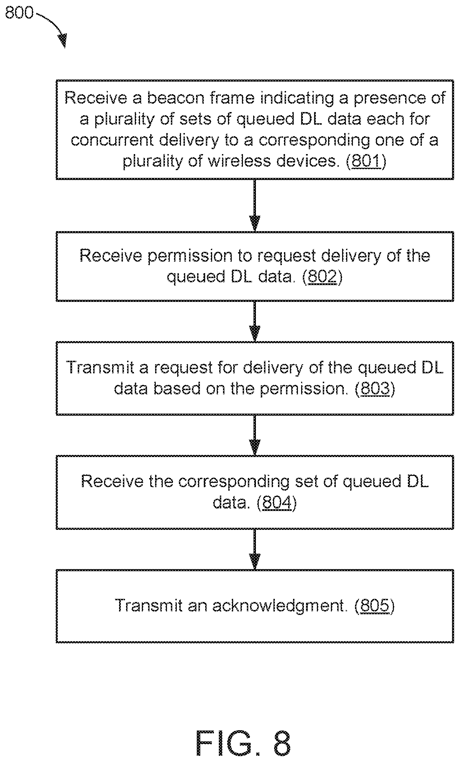

FIG. 8 is a flow chart depicting an example operation 800 for a first wireless device to receive queued downlink (DL) data from a second wireless device, in accordance with example embodiments. For the example operation 800, the first wireless device may be a mobile station (e.g., one of stations STA1-STA4 of FIG. 1 or STA 200 of FIG. 2), and the second wireless device may be an access point (e.g., AP 110 of FIG. 1 or AP 300 of FIG. 3).

The first wireless device may receive, from the second wireless device, a beacon frame indicating a presence (or not) of a plurality of sets of queued DL data each for concurrent delivery to a corresponding one of a plurality of wireless devices, the plurality of wireless devices including the first wireless device (801). The first wireless device may have exited a power save mode and entered an awake state, for example, according to a TBTT schedule to receive the beacon frame. The presence of queued DL data may be indicated by a TIM or a DTIM included in the beacon frame. In some aspects, the beacon frame may include an enhanced TIM element indicating that the first wireless device is not to contend for medium access to request delivery of queued DL data, but rather is to wait for permission (granted by the AP) to transmit a request for delivery of the queued DL data. The first wireless device may receive the beacon frame by executing one or more of frame formation and exchange SW module 243, power save management SW module 244, and queued data retrieval SW module 245.

Next, the first wireless device may receive, from the second wireless device, permission to request delivery of the queued DL data (802). The permission may be a PS-Trigger frame, for example, as described above with respect to FIG. 5. In some aspects, the first wireless device may receive the permission by executing one or more of frame formation and exchange SW module 243, power save management SW module 244, or queued data retrieval SW module 245.

The first wireless device may transmit, to the second wireless device, a request for delivery of the queued DL data based on the permission (803). The request for delivery of the queued DL data may be a PS-Poll frame or a Null Data frame having a PM bit set to 0 (e.g., to indicate that the first wireless device will remain in the awake state). In some aspects, the first wireless device may generate and transmit the request for delivery of the queued DL data by executing one or more of frame formation and exchange SW module 243, power save management SW module 244, and queued data retrieval SW module 245.

Then, the first wireless device may receive, from the second wireless device, the corresponding set of queued DL data (804). For some implementations, the queued DL data may be received as OFDMA communications or as MU-MIMO communications. For other implementations, the queued DL data may be received as one or more MD-AMPDUs. In some aspects, the first wireless device may receive the queued DL data by executing one or more of frame formation and exchange SW module 243, power save management SW module 244, and queued data retrieval SW module 245.

The first wireless device may transmit an acknowledgment to acknowledge reception of the queued DL data (805). The acknowledgment may be an ACK frame or a BA frame. For some implementations, the acknowledgment may indicate a power save mode status of the first wireless device. In some aspects, the first wireless device may generate and transmit the acknowledgment by executing one or more of frame formation and exchange SW module 243, power save management SW module 244, and queued data retrieval SW module 245.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the disclosure.

The methods, sequences or algorithms described in connection with the aspects disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor.

In the foregoing specification, the example embodiments have been described with reference to specific example embodiments thereof. It will, however, be evident that various modifications and changes may be made thereto without departing from the broader scope of the disclosure. The specification and drawings are, accordingly, to be regarded in an illustrative sense rather than a restrictive sense.

## Claims

1. A method for delivering queued downlink, DL, data to a plurality of first wireless devices, the method performed by a second wireless device and comprising:
determining (701), for each of the plurality of first wireless devices, a presence of a corresponding set of queued DL data (540(1), 540(2), 540(3));
transmitting (702) a beacon frame (510) identifying which of the plurality of first wireless devices has queued DL data (540(1), 540(2), 540(3)), the beacon frame (510) indicating to each of the identified first wireless devices to transmit a request (530(1), 530(2)) for delivery of the queued DL data (540(1), 540(2), 540(3)) upon receiving permission (520) from the second wireless device;
transmitting (703), to each of the identified first wireless devices, permission (520) to request delivery of queued DL data (540(1), 540(2), 540(3));
receiving (704), from each of the identified first wireless devices, a request (530(1), 530(2)) for delivery of the queued DL data (540(1), 540(2), 540(3)); and
concurrently transmitting (705), to each of the identified first wireless devices, the corresponding set of queued DL data (540(1), 540(2), 540(3)).

2. The method of claim 1, wherein at least one of the first wireless devices is a mobile station, STA (200), and the second wireless device is an access point, AP (110, 300).

3. The method of claim 1, wherein the permission (520) comprises a power-save, PS, trigger frame, and each of the requests (530(1), 530(2)) comprises at least one member of the group consisting of a power-save, PS, poll frame and a null data frame.

4. The method of claim 3, further comprising:
exchanging, with the plurality of first wireless devices, a capability to decode the PS trigger frame and to request delivery of the queued DL data (540(1), 540(2), 540(3)) based on the decoded PS trigger frame.

5. The method of claim 1, wherein each set of queued DL data (540(1), 540(2), 540(3)) is stored in a different transmit queue of the second wireless device.

6. The method of claim 1, wherein the beacon frame (510) includes an enhanced traffic indication map, TIM, element indicating that each of the identified first wireless devices is to transmit a corresponding one of the requests (530(1), 530(2)) upon receiving the permission (520).

7. The method of claim 1, wherein the queued DL data (540(1), 540(2), 540(3)) is transmitted according to a multi-user downlink protocol that is at least one member of the group consisting of an orthogonal frequency-domain multiple access, OFDMA, protocol and a multi-user, multiple-input multiple-output, MU-MIMO, protocol.

8. A computer-readable storage medium configured to store instructions that, when executed by one or more processors of a wireless device, cause the wireless device to perform a method according to any of the claims 1 to 7.

9. A wireless device, comprising:
means for determining, for each of a plurality of mobile devices, a presence of a corresponding set of queued downlink, DL, data (540(1), 540(2), 540(3));
means for transmitting a beacon frame (510) identifying which of the plurality of mobile devices has queued DL data (540(1), 540(2), 540(3)), the beacon frame (510) indicating to each of the identified mobile devices to transmit a request (530(1), 530(2)) for delivery of the queued DL data (540(1), 540(2), 540(3)) upon receiving permission (520) from the wireless device;
means for transmitting, to each of the identified mobile devices, permission (520) to request delivery of queued DL data (540(1), 540(2), 540(3));
means for receiving, from each of the identified mobile devices, a request (530(1), 530(2)) for delivery of the queued DL data (540(1), 540(2), 540(3)); and
means for concurrently transmitting, to each of the identified mobile devices, the corresponding set of queued DL data (540(1), 540(2), 540(3)).

10. The wireless device of claim 9, wherein the wireless device is an access point, AP (110, 300).

11. The wireless device of claim 9, wherein the permission (520) comprises a power-save, PS, trigger frame, and each of the requests (530(1), 530(2)) comprises at least one member of the group consisting of a power-save, PS, poll frame and a null data frame.

12. The wireless device of claim 11, further comprising:
means for exchanging, with the plurality of mobile devices, a capability to decode the PS trigger frame and to request delivery of the queued DL data (540(1), 540(2), 540(3)) based on the decoded PS trigger frame.

13. The wireless device of claim 9, wherein each set of queued DL data (540(1), 540(2), 540(3)) is stored in a different transmit queue of the wireless device.

14. The wireless device of claim 9, wherein the beacon frame (510) includes an enhanced traffic indication map, TIM, element indicating that each of the identified mobile devices is to transmit a corresponding one of the requests (530(1), 530(2)) upon receiving the permission (520).

15. The wireless device of claim 9, wherein the queued DL data (540(1), 540(2), 540(3)) is transmitted according to a multi-user downlink protocol that is at least one member of the group consisting of an orthogonal frequency-domain multiple access, OFDMA, protocol and a multi-user, multiple-input multiple-output, MU-MIMO, protocol.

## Patentansprüche

1. Ein Verfahren für Liefern von eingereihten Abwärtsverbindungs-, DL, Daten zu einer Vielzahl von ersten drahtlosen Geräten, wobei das Verfahren durchgeführt wird durch ein zweites drahtloses Gerät und aufweist:
Bestimmen (701), für jedes von der Vielzahl von ersten drahtlosen Geräten, eines Vorhandenseins von einem entsprechenden Satz von eingereihten Abwärtsverbindungs-Daten (540(1), 540(2), 540(3));
Übertragen (702) eines Beacon-Rahmens (510), der identifiziert welches von der Vielzahl von ersten drahtlosen Geräten eingereihte DL Daten (540(1), 540(2), 540(3)) hat, wobei der Beacon-Rahmen (510) jedem von den identifizierten ersten drahtlosen Geräten anzeigt eine Anfrage (530(1), 530(2)) für Lieferung von den eingereihten DL Daten (540(1), 540(2), 540(3)) zu Übertragen bei Empfangen von Erlaubnis (520) von dem zweiten drahtlosen Gerät;
Übertragen (703), zu jedem von den identifizierten ersten drahtlosen Geräten, von Erlaubnis (520) die Lieferung von eingereihten DL Daten (540(1), 540(2), 540(3)) anzufragen;
Empfangen (704), von jedem von den identifizierten ersten drahtlosen Geräten, einer Anfrage (530(1), 530(2)) für Lieferung von den eingereihten DL Daten (540(1), 540(2), 540(3)); und
gleichzeitiges Übertragen (705), zu jedem von den identifizierten ersten drahtlosen Geräten, des entsprechenden Satzes von eingereihten DL Daten (540(1), 540(2), 540(3)).

2. Das Verfahren von Anspruch 1, wobei zumindest eines von den ersten drahtlosen Geräten eine mobile Station, STA (200), ist, und das zweite drahtlose Gerät ein Zugriffspunkt, AP (110, 300), ist.

3. Das Verfahren von Anspruch 1, wobei die Erlaubnis (520) aufweist einen Energiespar, PS, Triggerrahmen und jede von den Anfragen (530(1), 530(2)) aufweist zumindest ein Mitglied von der Gruppe bestehend aus einem Energiespar, PS, Umfragerahmen und einem Nulldatenrahmen.

4. Das Verfahren von Anspruch 3, weiter aufweisend:
Austauschen, mit der Vielzahl von ersten drahtlosen Geräten, einer Fähigkeit den PS Triggerrahmen zu Dekodieren und Anzufragen von Lieferung von den eingereihten DL Daten (540(1), 540(2), 540(3)) basierend auf dem dekodierten PS Triggerrahmen.

5. Das Verfahren von Anspruch 1, wobei jeder Satz von eingereihten DL Daten (540(1), 540(2), 540(3)) gespeichert ist in einer anderen Übertragungswarteschlange von dem zweiten drahtlosen Gerät.

6. Das Verfahren von Anspruch 1, wobei der Beacon-Rahmen (510) enthält ein erweitertes Verkehrsanzeigekarte, TIM, Element anzeigend, dass jedes von den identifizierten ersten drahtlosen Geräten eine entsprechende eine von den Anfragen (530(1), 530(2)) Übertragen soll bei Empfangen von der Erlaubnis (520).

7. Das Verfahren von Anspruch 1, wobei die eingereihten DL Daten (540(1), 540(2), 540(3)) übertragen werden gemäß einem Mehrbenutzer-Abwärtsverbindungs-Protokoll, das zumindest ein Mitglied ist von der Gruppe bestehend aus einem orthogonalen Frequenzdomänen-Mehrfachzugriffs-, OFDMA, Protokoll und einem Mehrbenutzer-, Mehrfach-Eingang Mehrfach-Ausgang, MU-MIMO, Protokoll.

8. Ein computerlesbares Speichermedium konfiguriert zum Speichern von Anweisungen, die wenn sie durch einen oder mehrere Prozessoren von einem drahtlosen Gerät ausgeführt werden, verursachen, dass das drahtlose Gerät ein Verfahren gemäß einem von den Ansprüchen 1 bis 7 ausführt.

9. Ein drahtloses Gerät, aufweisend:
Mittel zum Bestimmen, für jedes von einer Vielzahl von mobilen Geräten, eines Vorhandenseins von einem entsprechenden Satz von eingereihten Abwärtsverbindungs-Daten (540(1), 540(2), 540(3));
Mittel zum Übertragen eines Beacon-Rahmens (510), der identifiziert welches von der Vielzahl von mobilen Geräten eingereihte DL Daten (540(1), 540(2), 540(3)) hat, wobei der Beacon-Rahmen (510) jedem von den identifizierten mobilen Geräten anzeigt eine Anfrage (530(1), 530(2)) für Lieferung von den eingereihten DL Daten (540(1), 540(2), 540(3)) zu Übertragen bei Empfangen von Erlaubnis (520) von dem drahtlosen Gerät;
Mittel zum Übertragen, zu jedem von den identifizierten mobilen Geräten, von Erlaubnis (520) die Lieferung von eingereihten DL Daten (540(1), 540(2), 540(3)) anzufragen;
Mittel zum Empfangen, von jedem von den identifizierten mobilen Geräten, einer Anfrage (530(1), 530(2)) für Lieferung von den eingereihten DL Daten (540(1), 540(2), 540(3)); und
Mittel zum gleichzeitigen Übertragen, zu jedem von den identifizierten mobilen Geräten, des entsprechenden Satzes von eingereihten DL Daten (540(1), 540(2), 540(3)).

10. Das drahtlose Gerät von Anspruch 9, wobei das drahtlose Gerät ein Zugriffspunkt, AP (110, 300), ist.

11. Das drahtlose Gerät von Anspruch 9, wobei die Erlaubnis (520) aufweist einen Energiespar, PS, Triggerrahmen und jede von den Anfragen (530(1), 530(2)) aufweist zumindest ein Mitglied von der Gruppe bestehend aus einem Energiespar, PS, Umfragerahmen und einem Nulldatenrahmen.

12. Das drahtlose Gerät von Anspruch 11, weiter aufweisend:
Mittel zum Austauschen, mit der Vielzahl von mobilen Geräten, einer Fähigkeit den PS Triggerrahmen zu Dekodieren und Anzufragen von Lieferung von den eingereihten DL Daten (540(1), 540(2), 540(3)) basierend auf dem dekodierten PS Triggerrahmen.

13. Das drahtlose Gerät von Anspruch 9, wobei jeder Satz von eingereihten DL Daten (540(1), 540(2), 540(3)) gespeichert ist in einer anderen Übertragungswarteschlange von dem drahtlosen Gerät.

14. Das drahtlose Gerät von Anspruch 9, wobei der Beacon-Rahmen (510) enthält ein erweitertes Verkehrsanzeigekarte, TIM, Element anzeigend, dass jedes von den identifizierten mobilen Geräten eine entsprechende eine von den Anfragen (530(1), 530(2)) Übertragen soll bei Empfangen von der Erlaubnis (520).

15. Das drahtlose Gerät von Anspruch 9, wobei die eingereihten DL Daten (540(1), 540(2), 540(3)) übertragen werden gemäß einem Mehrbenutzer-Abwärtsverbindungs-Protokoll, das zumindest ein Mitglied ist von der Gruppe bestehend aus einem orthogonalen Frequenzdomänen-Mehrfachzugriffs-, OFDMA, Protokoll und einem Mehrbenutzer-, Mehrfach-Eingang Mehrfach-Ausgang, MU-MIMO, Protokoll.

## Revendications

1. Procédé de distribution de données de liaison descendante, DL, mises en file d'attente à une pluralité de premiers dispositifs sans fil, le procédé étant réalisé par un second dispositif sans fil et comprenant :
la détermination (701), pour chacun de la pluralité de premiers dispositifs sans fil, d'une présence d'un ensemble correspondant de données DL mises en file d'attente (540(1), 540(2), 540(3)) ;
la transmission (702) une trame de balise (510) identifiant quel dispositif de la pluralité de premiers dispositifs sans fil a des données DL mises en file d'attente (540(1), 540(2), 540(3)), la trame de balise (510) indiquant à chacun des premiers dispositifs sans fil identifiés de transmettre une demande (530(1), 530(2)) pour distribuer les données DL mises en file d'attente (540(1), 540(2), 540(3)) lors de la réception d'une autorisation (520) à partir du second dispositif sans fil ;
la transmission (703), à chacun des premiers dispositifs sans fil identifiés, d'une autorisation (520) pour demander une distribution de données DL mises en file d'attente (540(1), 540(2), 540(3)) ;
la réception (704), à partir de chacun des premiers dispositifs sans fil identifiés, d'une demande (530(1), 530(2)) pour distribuer les données DL mises en file d'attente (540(1), 540(2), 540(3)) ; et
la transmission de manière simultanée (705), à chacun des premiers dispositifs sans fil identifiés, de l'ensemble correspondant de données DL mises en file d'attente (540(1), 540(2), 540(3)).

2. Procédé selon la revendication 1, dans lequel au moins un des premiers dispositifs sans fil est une station mobile, STA, (200) et le second dispositif sans fil est un point d'accès, AP, (110, 300).

3. Procédé selon la revendication 1, dans lequel l'autorisation (520) comprend une trame de déclencheur d'économie d'énergie, PS, et chacune des demandes (530(1), 530(2)) comprend au moins un membre du groupe constitué d'une trame d'interrogation d'économie d'énergie, PS, et d'une trame de données nulles.

4. Procédé selon la revendication 3, comprenant en outre :
l'échange, avec la pluralité de premiers dispositifs sans fil, d'une capacité pour décoder la trame de déclencheur PS et pour demander une distribution des données DL mises en file d'attente (540(1), 540(2), 540(3)) sur la base de la trame de déclencheur PS décodée.

5. Procédé selon la revendication 1, dans lequel chaque ensemble de données DL mises en file d'attente (540(1), 540(2), 540(3)) est stocké dans une file d'attente de transmission différente du second dispositif sans fil.

6. Procédé selon la revendication 1, dans lequel la trame de balise (510) inclut un élément de carte d'indication de trafic, TIM, avancé indiquant que chacun des premiers dispositifs sans fil identifiés doit transmettre une demande correspondante des demandes (530(1), 530(2)) lors de la réception de l'autorisation (520).

7. Procédé selon la revendication 1, dans lequel les données DL mises en file d'attente (540(1), 540(2), 540(3)) sont transmises selon un protocole de liaison descendante à multiples utilisateurs qui est au moins un membre du groupe constitué d'un protocole d'accès multiple à répartition en fréquence orthogonale, OFDMA, et d'un protocole multiples entrées et multiples sorties à multiples utilisateurs, MU-MIMO.

8. Support de stockage lisible par ordinateur configuré pour stocker des instructions qui, lorsqu'elles sont exécutées par un ou plusieurs processeurs d'un dispositif sans fil, amènent le dispositif sans fil à réaliser un procédé selon l'une quelconque des revendications 1 à 7.

9. Dispositif sans fil, comprenant :
un moyen pour déterminer, pour chacun d'une pluralité de dispositifs mobiles, une présence d'un ensemble correspondant de données de liaison descendante, DL, mises en file d'attente (540(1), 540(2), 540(3)) ;
un moyen pour transmettre une trame de balise (510) identifiant quel dispositif de la pluralité de dispositifs mobiles a des données DL mises en file d'attente (540(1), 540(2), 540(3)), la trame de balise (510) indiquant à chacun des dispositifs mobiles identifiés de transmettre une demande (530(1), 530(2)) pour distribuer les données DL mises en file d'attente (540(1), 540(2), 540(3)) lors de la réception d'une autorisation (520) à partir du dispositif sans fil ;
un moyen pour transmettre, à chacun des dispositifs mobiles identifiés, une autorisation (520) pour demander une distribution de données DL mises en file d'attente (540(1), 540(2), 540(3)) ;
un moyen pour recevoir, à partir de chacun des dispositifs mobiles identifiés, une demande (530(1), 530(2)) pour distribuer les données DL mises en file d'attente (540(1), 540(2), 540(3)) ; et
un moyen pour transmettre simultanément, à chacun des dispositifs mobiles identifiés, l'ensemble correspondant de données DL mises en file d'attente (540(1), 540(2), 540(3)).

10. Dispositif sans fil selon la revendication 9, dans lequel le dispositif sans fil est un point d'accès, AP (110, 300).

11. Dispositif sans fil selon la revendication 9, dans lequel l'autorisation (520) comprend une trame de déclencheur d'économie d'énergie, PS, et chacune des demandes (530(1), 530(2)) comprend au moins un membre du groupe constitué d'une trame d'interrogation d'économie d'énergie, PS, et d'une trame de données nulles.

12. Dispositif sans fil selon la revendication 11, comprenant en outre :
un moyen pour échanger, avec la pluralité de dispositifs mobiles, une capacité pour décoder la trame de déclencheur PS et pour demander une distribution des données DL mises en file d'attente (540(1), 540(2), 540(3)) sur la base de la trame de déclencheur PS décodée.

13. Dispositif sans fil selon la revendication 9, dans lequel chaque ensemble de données DL mises en file d'attente (540(1), 540(2), 540(3)) est stocké dans une file d'attente de transmission différente du dispositif sans fil.

14. Dispositif sans fil selon la revendication 9, dans lequel la trame de balise (510) inclut un élément de carte d'indication de trafic, TIM, avancé indiquant que des dispositifs mobiles identifiés doivent transmettre une demande correspondante des demandes (530(1), 530(2)) lors de la réception de l'autorisation (520).

15. Dispositif sans fil selon la revendication 9, dans lequel les données DL mises en file d'attente (540(1), 540(2), 540(3)) sont transmises selon un protocole de liaison descendante à multiples utilisateurs qui est au moins un membre du groupe constitué d'un protocole d'accès multiple par répartition en fréquence orthogonale, OFDMA, et d'un protocole multiples entrées et multiples sorties à multiples utilisateurs, MU-MIMO.
